# EUROPÄISCHE PATENTSCHRIFT

(11) **EP 3 662 738 B1**
(45) Veröffentlichungstag und Bekanntmachung des Hinweises auf die Patenterteilung: **02.08.2023**
(21) Anmeldenummer: 19202917.1
(22) Anmeldetag: 14.10.2019
(51) Int. Cl.: A01D 41/12

(54) **SELBSTFAHRENDER MÄHDRESCHER**
SELF-PROPELLED COMBINE HARVESTER
MOISSONNEUSE-BATTEUSE AUTOMOTRICE

(30) Priorität: 07.12.2018 DE 102018131432
(43) Veröffentlichungstag der Anmeldung: 10.06.2020
(73) Patentinhaber: CLAAS Selbstfahrende Erntemaschinen GmbH, 33428 Harsewinkel (DE)
(72) Erfinder: Diekamp, Andreas, 49176 Hilter (DE); Kersten, Johannes, 49176 Hilter a. TW (DE); Vieregge, Christopher, 32694 Dörentrup (DE); Baumgarten, Joachim, 48361 Beelen (DE); Schwarz, Michael, 33378 Rheda-Wiedenbrück (DE)
(74) Vertreter: CLAAS Gruppe

(56) Entgegenhaltungen:
- EP-A1- 0 958 727
- EP-A2- 1 790 208
- US-A- 3 071 246
- US-A1- 2016 106 040
- US-A1- 2018 310 474

## Beschreibung

Die vorliegende Erfindung betrifft einen selbstfahrenden Mähdrescher, umfassend eine Dreschvorrichtung, eine Abscheidevorrichtung, eine Reinigungsvorrichtung, der eine Sauggebläseanordnung mit zumindest einem Gehäuse, zumindest einer Eintrittsöffnung und zumindest einer Austrittsöffnung nachgeordnet ist, eine Häckselvorrichtung und zumindest eine Verteilvorrichtung zur Annahme und Ausbringung eines die Häckselvorrichtung durchlaufenden Gutstroms.

Aus der EP 1 790 208 A2 ist ein selbstfahrender Mähdrescher der eingangs genannten Art bekannt. Der Mähdrescher, umfasst eine Dreschvorrichtung, eine Abscheidevorrichtung, eine Reinigungsvorrichtung, der eine Sauggebläseanordnung mit zumindest einem Gehäuse, zumindest einer Eintrittsöffnung und zumindest einer Austrittsöffnung nachgeordnet ist, eine Häckselvorrichtung sowie zumindest eine Verteilvorrichtung zur Annahme und Ausbringung eines die Häckselvorrichtung durchlaufenden Gutstroms. Die Sauggebläseanordnung ist als Reinigungsgebläse der Reinigungsvorrichtung ausgebildet und dient dazu, einen im Wesentlichen aus Nichtkornbestandteilen bestehenden Gutstrom aus Kurzstroh, Spreu und dergleichen aus einem Maschinengehäuse des Mähdreschers heraus zu fördern und an eine Verteilvorrichtung zu übergeben, welche den Gutstrom über eine Verteilbreite auf dem Feldboden verteilt. Die Häckselvorrichtung dient dazu, den im Wesentlichen aus Stroh bestehenden, von der Abscheidevorrichtung kommenden Gutstrom zu zerkleinern. Die der Verteilvorrichtung zugeführten Gutströme werden von der Häckselvorrichtung und von der Sauggebläseanordnung jeweils beschleunigt, bevor diese in der Verteilvorrichtung vor der Verteilung miteinander vermischt werden. Diese Durchmischung der unterschiedlichen, beschleunigten Gutströme kann die Qualität der Verteilung und die Verteilbreite beeinflussen.

Ausgehend vom vorstehend genannten Stand der Technik liegt der Erfindung die Aufgabe zugrunde, einen selbstfahrenden Mähdrescher der eingangs genannten Art weiterzubilden, der sich durch eine verbesserte Verteilung der an die Verteilvorrichtung übergebenen Gutströme auszeichnet.

Diese Aufgabe wird erfindungsgemäß durch die Merkmale des Anspruchs 1 gelöst.

Vorteilhafte Weiterbildungen sind Gegenstand der Unteransprüche.

Gemäß dem Anspruch 1 wird ein selbstfahrender Mähdrescher, umfassend eine Dreschvorrichtung, eine Abscheidevorrichtung, eine Reinigungsvorrichtung, der eine Sauggebläseanordnung mit zumindest einem Gehäuse, zumindest einer Eintrittsöffnung und zumindest einer Austrittsöffnung nachgeordnet ist, eine Häckselvorrichtung sowie zumindest eine Verteilvorrichtung zur Annahme und Ausbringung eines die Häckselvorrichtung durchlaufenden Gutstroms, vorgeschlagen, wobei die zumindest eine Eintrittsöffnung der Sauggebläseanordnung der Reinigungsvorrichtung zugewandt und die zumindest eine Austrittsöffnung der Sauggebläseanordnung unterhalb der Häckselvorrichtung positioniert ist, so dass eine Übergabe eines von der Sauggebläseanordnung durch die zumindest eine Eintrittsöffnung angesaugten Luft- und Gutstroms an die Verteilvorrichtung in einem unteren Bereich der Verteilvorrichtung erfolgt, wobei die Verteilvorrichtung in einem oberen Bereich den die Häckselvorrichtung durchlaufenden Gutstrom und in dem unteren Bereich den Luft- und Gutstrom ausbringt. Im oberen Bereich bildet sich eine obere Schicht aus, die im Wesentlichen aus gehäckseltem Gut besteht. Im unteren Bereich bildet die Luft- und Gutstrom eine untere Schicht aus, oberhalb derer die obere Schicht im Wesentlichen parallel strömt. Der von der Häckselvorrichtung kommende Gutstrom wird dadurch den von der Sauggebläseanordnung kommenden Luft- und Gutstrom beim Austreten aus der Verteilvorrichtung unterstützt und beschleunigt. Dies hat den Effekt, dass der durch die Häckselvorrichtung zerkleinerte Gutstrom beim Austritt aus der Verteilvorrichtung auf dem Luft- und Gutstrom der Sauggebläseanordnung schwebt und somit eine größere Wurfweite bzw. Verteilbreite erzielt wird. Zudem generiert die Sauggebläseanordnung einen intensiven Luftstrom als ein konventionelles, vor der Reinigungsvorrichtung angeordnetes Druckgebläse, sodass ein höherer Anteil von Beimengungen und Staub aus dem Mähdrescher abführt werden kann.

Erfindungsgemäß ist in dem zumindest einen Gehäuse zumindest ein Läufer um eine horizontale Achse rotierend angeordnet, wobei das zumindest eine Gehäuse zwei spiegelbildlich angeordnete konische Gehäuseabschnitte aufweist, die koaxial zu der horizontalen Achse angeordnet sind. Die zumindest abschnittsweise kegelscheibenförmig ausgebildeten Gehäuseabschnitte umgeben den zumindest einen um die horizontale Achse rotierend angeordneten Läufer.

Dabei kann die zumindest eine Eintrittsöffnung als eine koaxial zu der horizontalen Achse angeordnete Öffnung in zumindest einem der Gehäuseabschnitte ausgebildet sein und die zumindest eine Austrittsöffnung als eine sich senkrecht zu einem einen Bereich zwischen Sauggebläseanordnung und Verteilvorrichtung überbrückenden Führungssegment erstreckende Öffnung. Die Zuführung des von dem zumindest einen Läufer angesaugten Luft- und Gutstromes in das Gehäuse erfolgt dabei im Wesentlichen von vorne, d.h. im Wesentlichen parallel zur Ebene von Sieben der Reinigungsvorrichtung. Die Abgabe des Luft- und Gutstromes erfolgt durch die zumindest eine Austrittsöffnung, die derart positioniert ist, dass ein annähernd tangentialer Übergang des Luft- und Gutstromes von der zumindest einen Austrittsöffnung in die nachgeordnete Verteilvorrichtung erfolgt. Dabei kann durch das Führungssegment ein freier Abschnitt zwischen der Sauggebläseanordnung und der Verteilvorrichtung überbrückt werden, in welchem die Häckselvorrichtung positioniert ist. Der Luft- und Gutstrom überströmt die Oberfläche des Führungssegmentes und kann somit gehäckseltes Gut in Richtung der Verteilvorrichtung weitertransportieren.

Insbesondere kann die zumindest eine Eintrittsöffnung durch jeweils einen sich abschnittsweise in Umfangsrichtung der horizontalen Achse erstreckenden, sich in axialer Richtung verjüngenden Leitabschnitt begrenzt sein, wobei der Leitabschnitt auf seiner der Reinigungsvorrichtung zugewandten Seite abschnittsweise unterbrochen ist. Der Leitabschnitt dient der Annahme um Umlenkung des aus Richtung der Reinigungsvorrichtung kommenden Luft- und Gutstromes. Die Anordnung des Leitabschnitts ist derart gewählt, dass die abschnittsweise Unterbrechung eine Annahme des Luft- und Gutstromes von vorne, d.h. im Wesentlichen parallel zur Ebene der Siebe der Reinigungsvorrichtung ermöglicht. Die Konizität des jeweiligen Leitabschnitts kann eine Umlenkung des angesaugten Luft- und Gutstromes in die Eintrittsöffnung des Gehäuses bewirken. Zugleich kann der jeweilige Leitanschnitt die Ansaugung von Luft- und Gut abschnittsweise begrenzen. Insbesondere kann eine Begrenzung der Ansaugung auf der Seite der jeweiligen Eintrittsöffnung erfolgen, welche der Verteilvorrichtung zugewandt ist.

Gemäß einer vorteilhaften Weiterbildung können im Bereich der Eintrittsöffnung Schneidelemente an einer um die horizontale Achse rotierenden Welle angeordnet sein. Die Schneidelemente können die Nichtkornbestandteile im angesaugten Luft- und Gutstrom im Freischnitt zerkleinern. Hierzu können die Schneidelemente als Messer oder Schneidfäden ausgeführt sein. Mittels der Schneidelemente können Überlängen im Strohs beseitigt werden, welche von der Dreschvorrichtung sowie der Abscheidevorrichtung kommend die Reinigungsvorrichtung erreichen. Es lasst sich eine Erhöhung des Zerkleinerungsgrades des Reinigungsabganges erreichen. Weiterhin können Kleckerverluste beim Übergang in die Verteilvorrichtung reduziert werden. Zudem kann durch die Schneidelemente eine verbesserte Feldhygiene erreicht werden, indem Unkrautsamen und Verlustkörner zerstört werden. Dies hat eine Verringerung des Einsatzes von Spritzmitteln sowie einen geringeren Aufwand bei der Bodenbearbeitung zur Unkrautvernichtung zur Folge. Die Welle, an der die Schneidelemente angeordnet sind, kann zudem den zumindest einen Läufer antreiben.

Eine Verbesserung der Zerstörung von Unkrautsamen und Verlustkörner kann dadurch erreicht werde, dass an der Innenseite der den Läufer umgebenden Gehäuseabschnitte mehrere Prallbleche angeordnet sind. Die Prallbleche können bis in den Bereich der Austrittsöffnung angeordnet sein. Bevorzugt können die Prallbleche schwenkbar an der Innenseite der Gehäuseabschnitte angelenkt sein. Zumindest die Prallbleche im Bereich der Austrittsöffnung sind entnehmbar, um bei kritischen Erntebedingungen einem Gutstau vorbeugen zu können.

Weiterhin können an der Innenseite der Gehäuseabschnitte dem zumindest einen Schneidelement gegenüberliegende Gegenmesser angeordnet sein. Dadurch lässt sich der Zerkleinerungsgrad des angesaugten Reinigungsabganges erhöhen, was zu einer weiteren Verbesserung der Feldhygiene beiträgt.

Gemäß einer bevorzugten Weiterbildung kann die Sauggebläseanordnung mittels einer Hebelanordnung aus ihrer Betriebsposition, in der die Übergabe des von der Sauggebläseanordnung bereitgestellten Luft- und Gutstroms an die Verteilvorrichtung erfolgt, in eine Transportposition überführbar sein, in welcher sich die Sauggebläseanordnung in einer Position im Inneren des Maschinengehäuses unterhalb der Abscheidevorrichtung befindet. Insbesondere kann die Sauggebläseanordnung um eine Schwenkachse schwenkbar ausgeführt sein.

Bevorzugt kann die zumindest eine Austrittsöffnung der Sauggebläseanordnung an wenigstens einem Kanalsegment ausgebildet sein, an welches sich das Führungssegment anschließt. Vorzugsweise können mehrere Kanalsegmente in einer gemeinsamen, horizontalen Ebene liegend nebeneinander angeordnet sein. Dabei kann jedes Kanalsegment eine Austrittsöffnung aufweisen.

Des Weiteren kann die Sauggebläseanordnung Luft im Wesentlichen durch einen vor der Reinigungsvorrichtung befindlichen Ansaugbereich ansaugen, wobei im Ansaugbereich wenigstens ein Luftleitelement angeordnet ist. Das wenigstens eine Luftleitelement kann dazu dienen, einen Teilluftstrom in Richtung einer unterhalb der Reinigungsvorrichtung angeordneten Kornförderschnecke umzulenken. Mittels der Kornförderschnecke wird das gereinigte Korn, welches die Reinigungsvorrichtung passiert hat, einer Fördervorrichtung zugeführt, die das Korn in einen Korntank des Mähdreschers fördert. Die Umlenkung des Teilluftstroms in Richtung der Kornförderschnecke bewirkt durch die durch Erhöhung des maximalen Schüttkegels einen höheren Druck auf die Kornförderschnecke, wodurch eine höhere Kornbergeleistung erreicht werden kann. Ein Herausrieseln von Körnern bei hohen Durchsätzen kann zumindest minimiert oder ganz vermieden werden.

Hierzu kann das wenigstens eine Luftleitelement als ein Leitblech und/oder als jalousieartig angeordnete, insbesondere verstellbare, Lamellen ausgeführt sein.

Im Allgemeinen sind die Dreschvorrichtung, die Abscheidevorrichtung, die Reinigungsvorrichtung, die Sauggebläseanordnung und die Häckselvorrichtung von einem Maschinengehäuse umgeben, wobei zumindest im Bereich der Dreschvorrichtung und der Abscheidevorrichtung Verschlusselemente angeordnet sind, welche der Umlenkung des von der Sauggebläseanordnung angesaugten Luftstroms im Inneren des Maschinengehäuses dienen. Mittels der Verschlusselemente kann der von der Sauggebläseanordnung generierte Luftstrom in der Weise umgeleitet werden, dass dieser gezielt kritische Baugruppen über- oder umströmt, um Ablagerungen zu beseitigen. So können durch die gezielte Umlenkung des Luftstroms beispielsweise Ablagerungen auf der als Trennrotor ausgebildeten Abscheidevorrichtung ohne zusätzlichen Arbeitsaufwand behoben werden. Bei einem Fruchtartwechsel lässt sich ein vereinfachtes Reinigen des Mähdreschers und dessen Arbeitsaggregate erreichen. Die Verschlusselemente können automatisch ansteuerbar sein. Auf diese Weise ließe sich ein Reinigungsprogramm für die Arbeitsaggregate des Mähdreschers ermöglichen.

Insbesondere kann sich zwischen einem unterhalb der Abscheidevorrichtung angeordneten Rücklaufboden und einem unterhalb der Dreschvorrichtung angeordneten Förderboden eine belüftete Fallstufe ausbilden. Die Sauggebläseanordnung kann Luft durch die unterhalb der Dreschvorrichtung angeordnete Steinfangmulde zwischen dem durch die zwischen dem Rücklaufboden und dem Förderboden ausgebildete Fallstufe ansaugen. Die zusätzliche Durchströmung sorgt für eine zusätzliche Entmischung des vom Rücklaufboden kommenden Gutstroms und trägt Spreu nach hinten aus dem Mähdrescher aus.

Gemäß einer bevorzugten Ausführung kann im Bereich der zumindest einen Austrittsöffnung der Sauggebläseanordnung wenigstens ein Verlustsensor ausgeführtes Sensorelement angeordnet sein. Der wenigstens eine Verlustsensor kann als Kopfsensor ausgeführt sein. Die der Reinigungsvorrichtung nachgeordnete Positionierung der als Reinigungsgebläse ausgeführten Sauggebläseanordnung hat den Vorteil, dass mit dem Luftstrom ausgetragene oder von der Reinigungsvorrichtung abgeförderte Verlustkörner von der Sauggebläseanordnung angesaugt werden und diese passieren. Durch die Anordnung des wenigstens einen Verlustsensors im Bereich der zumindest einen Austrittsöffnung lässt sich die Genauigkeit der Erfassung gegenüber einer konventionellen Anordnung von Verlustsensoren am Ende eines Siebes der Reinigungsvorrichtung erhöhen.

Weiterhin kann im Bereich der zumindest einen Austrittsöffnung der Sauggebläseanordnung wenigstens ein als Radarsensor ausgeführtes Sensorelement angeordnet sein. Mittels des Radarsensors lässt sich die Geschwindigkeit des Gutstroms, insbesondere der Spreu, bestimmen.

Des Weiteren kann im Bereich der zumindest einen Austrittsöffnung der Sauggebläseanordnung wenigstens ein als Prallplatte mit Wiegezelle ausgeführtes Sensorelement angeordnet sein. In Verbindung mit der Geschwindigkeitsbestimmung durch den Radarsensor lässt sich der Gutdurchsatz bestimmen.

Vorzugsweise kann die Sauggebläseanordnung dazu eingerichtet sein, mit dem Luftstrom angesaugte Spreu zu separieren und auf ein Transportfahrzeug zu überladen. Dabei kann die Spreu mittels der Luftströmung direkt auf das Transportfahrzeug werden. Denkbar ist es aber auch, die separierte Spreu einer Fördervorrichtung, beispielsweise einer Förderschnecke, zuzuführen, mit welcher die Spreu auf das Transportfahrzeug überladen wird.

Die vorliegende Erfindung wird nachstehend anhand eines in den Zeichnungen dargestellten Ausführungsbeispieles näher erläutert.

Es zeigen:
- Fig. 1: eine schematische Darstellung eines Mähdreschers 1 in einer Teilansicht;
- Fig. 2: schematisch eine Ansicht einer Sauggebläseanordnung mit nachgeordneter Häckselvorrichtung und Verteilvorrichtung;
- Fig. 3: schematisch eine perspektivische Ansicht der Sauggebläseanordnung;
- Fig. 4: schematisch eine Sauggebläseanordnung in Seitenansicht;
- Fig. 5: schematisch eine perspektivische Ansicht der Sauggebläseanordnung gemäß Fig. 4;
- Fig. 6: schematisch eine Teilansicht von Förderboden und Reinigungsvorrichtung mit Luftleitelementen; und
- Fig. 7: schematisch eine Teilansicht von Förderboden und Reinigungsvorrichtung mit Luftleitelementen gemäß einer zweiten Ausführungsform.

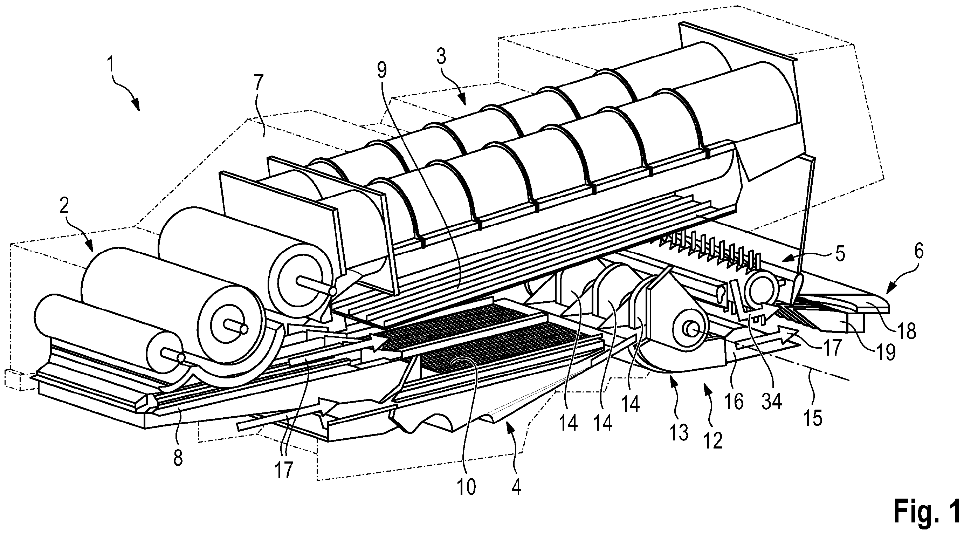

In Fig. 1 ist eine schematische Darstellung eines Mähdreschers 1 in einer Teilansicht gezeigt. Der Mähdrescher 1 umfasst eine Dreschvorrichtung 2, die als ein Mehrtrommeldreschwerk ausgeführt ist, eine Abscheidevorrichtung 3, die im dargestellten Ausführungsbeispiel als Trennrotoren ausgeführt ist, eine Reinigungsvorrichtung 4, eine Häckselvorrichtung 5 sowie eine Verteilvorrichtung 6, die als Streublechverteiler ausgeführt ist. Die Dreschvorrichtung 2, die Abscheidevorrichtung 3, die Reinigungsvorrichtung 4 sowie die Häckselvorrichtung 5 sind von einem Maschinengehäuse 7 umgeben. Die Verteilvorrichtung 6 ist außenseitig an dem Maschinengehäuse 7 angeordnet. Unterhalb der Dreschvorrichtung 2 ist ein oszillierend angetriebener Förderboden 8 angeordnet. Unterhalb der Abscheidevorrichtung 3 ist ein Rücklaufboden 9 angeordnet ist. Die Reinigungsvorrichtung 4 umfasst ein Obersieb 10 und ein Untersieb 11. Der Reinigungsvorrichtung 4 ist eine Sauggebläseanordnung 12 nachgeordnet, die als Reinigungsgebläse dient. Die Sauggebläseanordnung 12 weist zumindest ein Gehäuse 13 auf. Das zumindest eine Gehäuse 13 umfasst spiegelbildlich angeordnete konische Gehäuseabschnitte 14. Die Gehäuseabschnitte 14 sind koaxial zu einer horizontalen Achse 15. An das zumindest eine Gehäuse 13 schließt sich ein Führungssegment 16 an. Die Sauggebläseanordnung 12 saugt einen Luft- und Gutstrom 17 an, der im Wesentlichen Spreu, Kurzstroh und dergleichen enthält. Der Luft- und Gutstrom wird im Wesentlichen im Bereich der Dreschvorrichtung 2 sowie der Reinigungsvorrichtung 4 angesaugt und von der Sauggebläseanordnung 12 über das Führungssegment 16 an die Verteilvorrichtung 6 weitergeleitet. Das Führungssegment 16 überbrückt den horizontal verlaufenden Abschnitt zwischen der Sauggebläseanordnung 12 und der Verteilvorrichtung 6. Oberhalb des Führungssegments 16 ist die Häckselvorrichtung 5 angeordnet, welche einen Gutstrom 34, der im Wesentlichen aus zerkleinertem Stroh besteht, an die Verteilvorrichtung 6 abgibt. Durch das Führungssegment 16 wird das Austreten von gehäckseltem Gut vor dem Erreichen der Verteilvorrichtung 6 verhindert.

Das zumindest eine Gehäuse 13 der Sauggebläseanordnung 12 kann um eine horizontale Achse 15 aus ihrer Betriebsposition, in der die Übergabe des von der Sauggebläseanordnung 12 bereitgestellten Luft- und Gutstroms 17 an die Verteilvorrichtung 6 erfolgt, in eine Transportposition überführbar sein, in welcher sich die Sauggebläseanordnung 12 in einer Position unterhalb der Abscheidevorrichtung 3 und teilweise oberhalb der Reinigungsvorrichtung 4 befindet.

Die als Streublechverteiler ausgeführte Verteilvorrichtung 6 umfasst einen Deckelbauteil 18, auf dessen Unterseite Streuleitbleche 19 angeordnet sind. Die Streuleitbleche 19 sind jeweils um eine vertikale Achse verschwenkbar an dem Deckelbauteil 18 angeordnet. Im Inneren des Deckelbauteils 18 ist eine Aktorik angeordnet, mittels der die Streuleitbleche 19 um die vertikale Achse einzeln oder gruppenweise verschwenkbar sind.

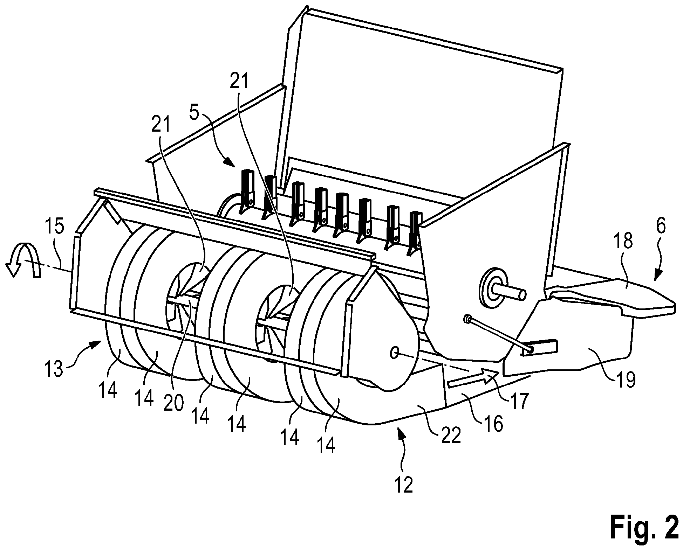

In Fig. 2 ist schematisch eine Ansicht der Sauggebläseanordnung 12 mit nachgeordneter Häckselvorrichtung 5 und Verteilvorrichtung 6 dargestellt. Koaxial zu der horizontalen Achse 15 verläuft eine Welle 20, die sich zumindest über die Breite des Gehäuses 13 erstreckt. Auf der Welle 20 sind Läufer 21 angeordnet, welche von jeweils zwei der kegelscheibenförmigen Gehäuseabschnitten 14 umgeben sind. Die kegelscheibenförmigen Gehäuseabschnitte 14 verjüngen sich nach außen in axialer Richtung. An dem jeweiligen Gehäuseabschnitt 14 ist ein Kanalsegment 22 angeordnet, in welches der von dem jeweiligen Läufer 21 geförderte Luft- und Gutstrom 17 einströmt. Der aus den Kanalsegmenten 22 austretende Luft- und Gutstrom 17 wird über die Oberfläche des Führungssegments 16 der Verteilvorrichtung 6 zugeführt.

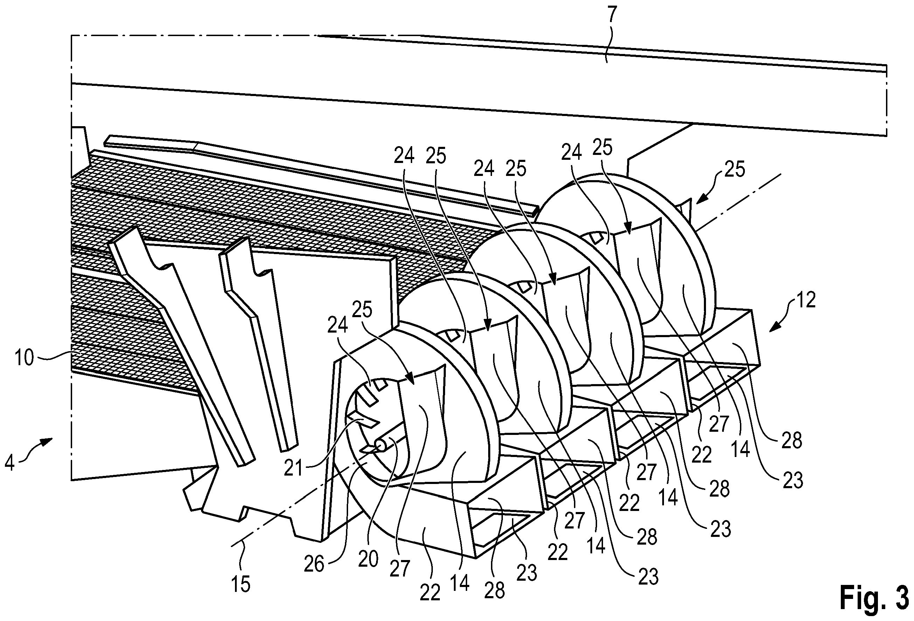

Fig. 3 zeigt schematisch eine perspektivische Ansicht der Sauggebläseanordnung 12, die der Reinigungsvorrichtung 4 nachgeordnet ist. An das Obersieb 10 der Reinigungsvorrichtung 4 schließt sich die Sauggebläseanordnung 12 an. Jeder Gehäuseabschnitt 14 weist eine Eintrittsöffnung 24 auf, durch welche sich die horizontale Welle 20 erstreckt. Durch die jeweilige Eintrittsöffnung 14 wird der Luft- und Gutstrom 17 von den Läufern 21 angesaugt. Dabei wird der Bereich um die jeweilige Eintrittsöffnung 24, in welchem der Luft- und Gutstrom 17 von den Läufern 21 angesaugt wird, durch sich in axialer Richtung verjüngende Leitabschnitte 25 begrenzt. Die Leitabschnitte 25 verhindern, dass ein unerwünschter Luftstrom aus dem Bereich der Häckselvorrichtung 5 angesaugt wird. Die Leitabschnitte 25 weisen einen unteren halbkreisförmigen Abschnitt 26 auf, der im Wesentlichen koaxial zu der Welle 20 an dem Gehäuseabschnitt 14 angeordnet ist. Der halbkreisförmige Abschnitt 26 geht in einen gerade verlaufenden Abschnitt 27 über, der sich im Wesentlichen vertikal zu der Welle 20 erstreckt.

Im dargestellten Ausführungsbeispiel weist jeder Kanalabschnitt 22 eine Austrittsöffnung 28 auf, auf aus welcher der Luft- und Gutstrom 17 austritt. Im Bereich jeder Austrittsöffnung 28 ist zumindest ein Sensorelement 23 angeordnet, welches der Erfassung einer Eigenschaft des Luft- und Gutstromes 17 dient. So kann zur Erfassung von Verlustkörner das zumindest eine Sensorelement 23 als Klopfsensor ausgebildet sein. Die Anordnung des zumindest einen Sensorelementes 23 erfolgt dabei an Wandbereichen des Kanalabschnittes 22, an welchen der Luft- und Gutstromes 17 hauptsächlich entlang strömt. Alternativ oder zusätzlich kann als Sensorelement 23 ein Radarsensor in dem jeweiligen Kanalabschnitt 22 angeordnet sein. Mittels des als Radarsensor ausgeführten Sensorelementes 23 kann die Geschwindigkeit des Gutes im Luft- und Gutstrom 17 bestimmt werden. Durch eine Kombination des Radarsensors mit einem weiteren, als Prallplatte und einer daran angeordneten Wiegezelle ausgeführten, Sensorelement 23 ließe sich der Durchsatz bestimmen.

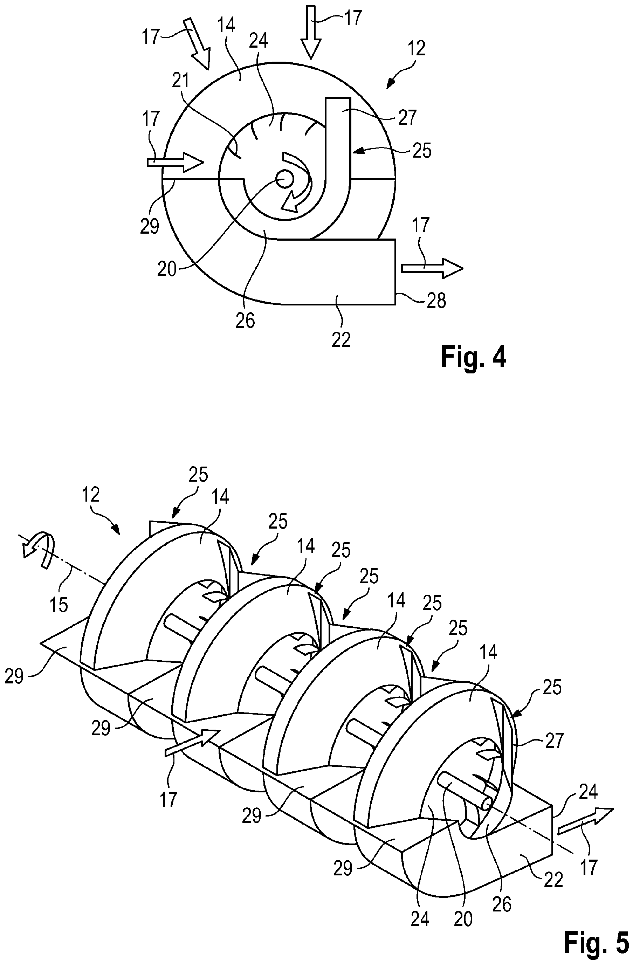

In Fig. 4 ist schematisch die Sauggebläseanordnung 12 in Seitenansicht dargestellt. Der jeweilige Leitabschnitt 25 beschränkt die Annahme des Luft- und Gutstromes 17 auf einen etwa viertelkreisförmigen Bereich um die Eintrittsöffnung 24. Ein horizontal verlaufendes Segment 29 erstreckt sich in radialer Richtung des Gehäuseabschnitts 14 ausgehend von dem halbkreisförmigen Abschnitt 26 des Leitabschnitts 25. Wie aus der Darstellung in Fig. 5 ersichtlich ist, bilden die jeweils horizontal verlaufenden Segment 29 eine Annahmeebene für den aus Richtung der Reinigungsvorrichtung 4 kommenden Luft- und Gutstrom 17. Hierzu kann das horizontal verlaufende Segment 29 auf annähernd der gleichen Höhe wie das Obersieb 10 der Reinigungsvorrichtung 4 angeordnet sein. Hierdurch wird eine Ansaugung von Luft von unten unter Umgehung des Obersiebes 11 vermieden.

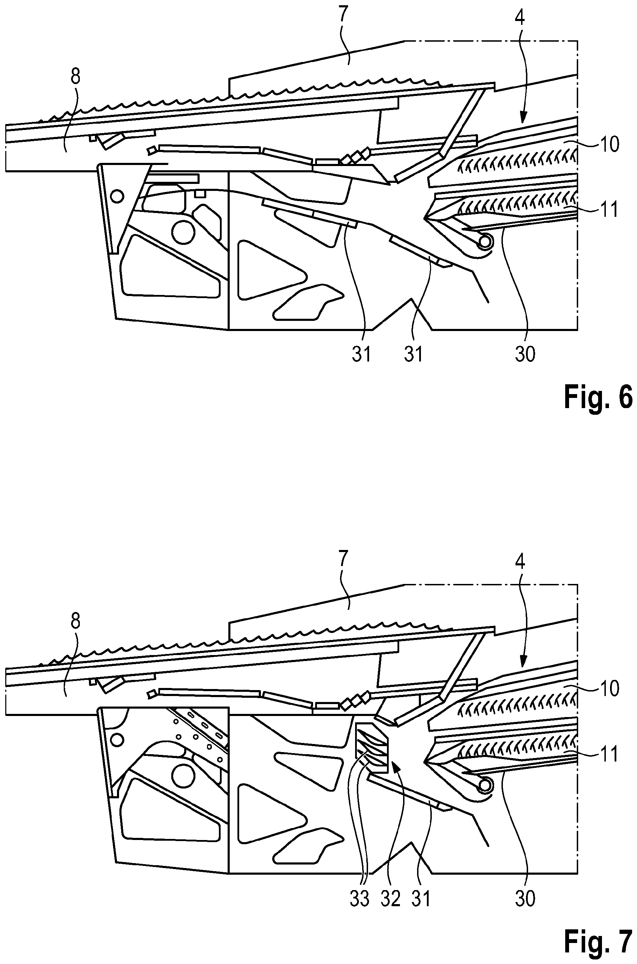

Fig. 6 zeigt schematisch eine Teilansicht des Förderbodens 8 und der Reinigungsvorrichtung 4. Körner, welche durch beide Siebe 10, 11 der Reinigungsvorrichtung 4 gelangen, fallen auf einen schräg verlaufenden Auffang- und Führungsboden 30 und gleiten in eine - nicht dargestellte - Kornförderschnecke, welche die Körner der Fördervorrichtung zuführt, mittels der das Korn in den Korntank gefördert wird. Unterhalb des Förderbodens 8 bzw. des Siebes 11 ist zumindest ein Luftleitelement 31 im Ansaugbereich angeordnet, welches den von der Sauggebläseanordnung 12 erzeugten Saugwind anteilig auf die Kornförderschnecke umlenken. Das zumindest eine Luftleitelement 31 ist in Längsrichtung des Mähdreschers geneigt angeordnet. Das zumindest eine Luftleitelement 31 ist als ein Leitblech ausgeführt, welches sich zumindest über die Breite des Ansaugbereiches erstreckt.

In Fig. 7 ist schematisch eine Teilansicht von Förderboden 8 und Reinigungsvorrichtung 4 mit Luftleitelementen 31, 32 gemäß einer zweiten Ausführungsform dargestellt. Neben dem als Leitblech ausgeführten Luftleitelement 31 kann ein weiteres jalousieartig ausgeführtes Luftleitelement 32 vorgesehen sein. Das Luftleitelement 32 weist eine im Wesentlichen vertikale Orientierung auf. Es umfasst mehrere im Wesentlichen parallel zueinander angeordnete Lamellen 33. Die Neigung der Lamellen 33 ist verstellbar.

Durch die Anordnung von zumindest einem Luftleitelement 31, 32 kann eine Erhöhung des maximalen Schüttkegels erreicht werden, so dass von dem Korn mehr Druck auf die Kornschnecke ausgeübt wird. Hierdurch lässt sich eine höhere Kornbergeleistung erreichen sowie das Herausrieseln der Körner bei hohen Durchsätzen minimieren oder vermeiden.

Die zumindest eine Eintrittsöffnung 24 der Sauggebläseanordnung 12 ist der Reinigungsvorrichtung 4 zugewandt und die zumindest eine Austrittsöffnung 28 der Sauggebläseanordnung 12 ist unterhalb der Häckselvorrichtung 6 positioniert, so dass eine Übergabe des von der Sauggebläseanordnung 12 durch die zumindest eine Eintrittsöffnung 24 angesaugten Luft- und Gutstroms 17 an die Verteilvorrichtung 6 in einem unteren Bereich der Verteilvorrichtung 6 erfolgt, wobei die Verteilvorrichtung 6 in einem oberen Bereich den die Häckselvorrichtung 5 durchlaufenden Gutstrom 34 und in dem unteren Bereich den Luft- und Gutstrom 17 ausbringt. Der von der Häckselvorrichtung 5 kommende Gutstrom 34 aus im Wesentlichen gehäckseltem Stroh wird durch den von der Sauggebläseanordnung 12 kommenden Luft- und Gutstrom 17 im Bereich des Führungssegmentes 16 unterstützt und beschleunigt. Der von der Häckselvorrichtung 5 kommende Gutstrom 34 strömt in einem oberen Bereich der Verteilvorrichtung 6 zwischen den Streuleitblechen 19 hindurch. Der Luft- und Gutstrom 17 strömt unterhalb des von der Häckselvorrichtung 5 kommenden Gutstromes 34 in einem unteren Bereich der Verteilvorrichtung 6 zwischen den Streuleitblechen 19 hindurch. Im unteren Bereich bildet der Luft- und Gutstrom 17 eine untere Schicht aus, oberhalb derer der eine obere Schicht ausbildende Gutstrom 34 im Wesentlichen parallel strömt. Dies hat den Effekt, dass der durch die Häckselvorrichtung 5 zerkleinerte Gutstrom 26 beim Durchströmen und beim Austreten aus der Verteilvorrichtung 6 auf dem von der Sauggebläseanordnung 12 kommenden Luft- und Gutstrom 17 schwebt und somit eine größere Wurfweite bzw. Verteilbreite erzielt wird. Der Einfluss der Schwerkraft auf den Gutstrom nach dem Verlassen der Häckselvorrichtung 5 wird durch den unterstützenden Luft- und Gutstrom 17 kompensiert. Zudem generiert die Sauggebläseanordnung 12 einen intensiven Luftstrom, sodass ein höherer Anteil von Beimengungen und Staub aus dem Mähdrescher 1 abführt werden kann.

Insbesondere kann sich zwischen einem unterhalb der Abscheidevorrichtung 3 angeordneten Rücklaufboden 9 und einem unterhalb der Dreschvorrichtung 2 angeordneten Förderboden 8 eine belüftete Fallstufe ausbilden. Die Sauggebläseanordnung 12 kann Luft durch die unterhalb der Dreschvorrichtung 2 angeordnete Steinfangmulde durch die zwischen dem Rücklaufboden 9 und dem Förderboden 8 ausgebildete Fallstufe ansaugen. Die zusätzliche Durchströmung sorgt für eine zusätzliche Entmischung des vom Rücklaufboden 9 kommenden Gutstroms und trägt Spreu nach hinten aus dem Mähdrescher 1 aus.

### Bezugszeichenliste

| | | | |
|---|---|---|---|
| 1 | Mähdrescher | 31 | Luftleitelement |
| 2 | Dreschvorrichtung | 32 | Luftleitelement |
| 3 | Abscheidevorrichtung | 33 | Lamelle |
| 4 | Reinigungsvorrichtung | 34 | Gutstrom |
| 5 | Häckselvorrichtung | | |
| 6 | Verteilvorrichtung | | |
| 7 | Maschinengehäuse | | |
| 8 | Förderboden | | |
| 9 | Rücklaufboden | | |
| 10 | Obersieb | | |
| 11 | Untersieb | | |
| 12 | Sauggebläseanordnung | | |
| 13 | Gehäuse | | |
| 14 | Gehäuseabschnitt | | |
| 15 | Horizontale Achse | | |
| 16 | Führungssegment | | |
| 17 | Luft- und Gutstrom | | |
| 18 | Deckelbauteil | | |
| 19 | Streuleitblech | | |
| 20 | Welle | | |
| 21 | Läufer | | |
| 22 | Kanalsegment | | |
| 23 | Sensorelement | | |
| 24 | Eintrittsöffnung | | |
| 25 | Leitabschnitt | | |
| 26 | Halbkreisförmiger Abschnitt | | |
| 27 | Gerader Abschnitt | | |
| 28 | Austrittsöffnung | | |
| 29 | Segment | | |
| 30 | Auffang- und Führungsboden | | |

## Patentansprüche

1. Selbstfahrender Mähdrescher (1), umfassend eine Dreschvorrichtung (1), eine Abscheidevorrichtung (3), eine Reinigungsvorrichtung (4), der eine Sauggebläseanordnung (12) mit zumindest einem Gehäuse (13), zumindest einer Eintrittsöffnung (24) und zumindest einer Austrittsöffnung (28) nachgeordnet ist, eine Häckselvorrichtung (5) sowie zumindest eine Verteilvorrichtung (6) zur Annahme und Ausbringung eines die Häckselvorrichtung (5) durchlaufenden Gutstroms (34), wobei die zumindest eine Eintrittsöffnung (24) der Sauggebläseanordnung (12) der Reinigungsvorrichtung (4) zugewandt und die zumindest eine Austrittsöffnung (28) der Sauggebläseanordnung (12) unterhalb der Häckselvorrichtung (5) positioniert ist, so dass eine Übergabe eines von der Sauggebläseanordnung (12) durch die zumindest eine Eintrittsöffnung (24) angesaugten Luft- und Gutstroms (17) an die Verteilvorrichtung (6) in einem unteren Bereich der Verteilvorrichtung (6) erfolgt, wobei die Verteilvorrichtung (6) in einem oberen Bereich den die Häckselvorrichtung (5) durchlaufenden Gutstrom (34) und in dem unteren Bereich den Luft- und Gutstrom (17) ausbringt, **dadurch gekennzeichnet, dass** in dem zumindest einen Gehäuse (13) zumindest ein Läufer (21) um eine horizontale Achse (15) rotierend angeordnet ist, und dass das zumindest eine Gehäuse (13) zwei spiegelbildlich angeordnete konische Gehäuseabschnitte (14) aufweist, die koaxial zu der horizontalen Achse (15) angeordnet sind.

2. Mähdrescher (1) nach Anspruch 1, **dadurch gekennzeichnet, dass** die zumindest eine Eintrittsöffnung (24) als eine koaxial zu der horizontalen Achse (15) angeordnete Öffnung in zumindest einem der Gehäuseabschnitte (14) ausgebildet ist und die zumindest eine Austrittsöffnung (28) als eine sich senkrecht zu einem einen Bereich zwischen Sauggebläseanordnung (12) und Verteilvorrichtung (6) überbrückenden Führungssegment (16) erstreckende Öffnung.

3. Mähdrescher (1) nach Anspruch 1 oder 2, **dadurch gekennzeichnet, dass** die zumindest eine Eintrittsöffnung (24) durch jeweils einen sich abschnittsweise in Umfangsrichtung der horizontalen Achse (15) erstreckenden, sich in axialer Richtung verjüngenden Leitabschnitt (25) begrenzt ist, wobei der Leitabschnitt (25) auf seiner der Reinigungsvorrichtung (4) zugewandten Seite abschnittsweise unterbrochen ist.

4. Mähdrescher (1) nach einem der Ansprüche 1 bis 3, **dadurch gekennzeichnet, dass** im Bereich der Eintrittsöffnung (24) Schneidelemente an einer um die horizontale Achse (15) rotierenden Welle (20) angeordnet sind.

5. Mähdrescher (1) nach einem der Ansprüche 1 bis 4, **dadurch gekennzeichnet, dass** die Sauggebläseanordnung (12) mittels einer Hebelanordnung aus ihrer Betriebsposition, in der die Übergabe des von der Sauggebläseanordnung (12) bereitgestellten Luft- und Gutstroms (17) an die Verteilvorrichtung (6) erfolgt, in eine Transportposition überführbar ist, in welcher sich die Sauggebläseanordnung (12) in einer Position im Inneren des Maschinengehäuses (7) unterhalb der Abscheidevorrichtung (3) befindet.

6. Mähdrescher (1) nach einem der Ansprüche 2 bis 5, **dadurch gekennzeichnet, dass** die zumindest eine Austrittsöffnung (28) der Sauggebläseanordnung (12) an wenigstens einem Kanalsegment (22) ausgebildet ist, an welches sich das Führungssegment (16) anschließt.

7. Mähdrescher (1) nach einem der Ansprüche 1 bis 6, **dadurch gekennzeichnet, dass** die Sauggebläseanordnung (12) Luft im Wesentlichen durch einen vor der Reinigungsvorrichtung (4) befindlichen Ansaugbereich ansaugt, wobei im Ansaugbereich wenigstens ein Luftleitelement (31, 32) angeordnet ist.

8. Mähdrescher (1) nach einem der Ansprüche 1 bis 7, **dadurch gekennzeichnet, dass** die Dreschvorrichtung (2), die Abscheidevorrichtung (3), die Reinigungsvorrichtung (4), die Sauggebläseanordnung (12) die Häckselvorrichtung (5) von einem Maschinengehäuse (7) umgeben sind, wobei zumindest im Bereich der Dreschvorrichtung (2) und der Abscheidevorrichtung (3) Verschlusselemente angeordnet sind, welche der Umlenkung des von der Sauggebläseanordnung (12) angesaugten Luftstroms im Inneren des Maschinengehäuses (7) dienen.

9. Mähdrescher (1) nach einem der Ansprüche 1 bis 8, **dadurch gekennzeichnet, dass** sich zwischen einem unterhalb der Abscheidevorrichtung (3) angeordneten Rücklaufboden (9) und einem unterhalb der Dreschvorrichtung (2) angeordneten Förderboden (8) eine belüftete Fallstufe ausbildet.

10. Mähdrescher (1) nach einem der Ansprüche 1 bis 9, **dadurch gekennzeichnet, dass** im Bereich der zumindest einen Austrittsöffnung (28) der Sauggebläseanordnung (12) wenigstens ein als Verlustsensor ausgeführtes Sensorelement (23) angeordnet ist.

11. Mähdrescher (1) nach einem der Ansprüche 1 bis 10, **dadurch gekennzeichnet, dass** im Bereich der zumindest einen Austrittsöffnung (28) der Sauggebläseanordnung (12) wenigstens ein als Radarsensor ausgeführtes Sensorelement (23) angeordnet ist.

12. Mähdrescher (1) nach einem der Ansprüche 1 bis 11, **dadurch gekennzeichnet, dass** im Bereich der zumindest einen Austrittsöffnung (12) der Sauggebläseanordnung (12) wenigstens ein als Prallplatte mit Wiegezelle ausgeführtes Sensorelement (23) angeordnet ist.

13. Mähdrescher (1) nach einem der Ansprüche 1 bis 12, **dadurch gekennzeichnet, dass** die Sauggebläseanordnung (12) dazu eingerichtet ist, mit dem Luftstrom angesaugte Spreu zu separieren und auf ein Transportfahrzeug zu überladen.

## Claims

1. A self-propelled combine harvester (1), comprising a threshing device (1), a separating device (3), a cleaning device (4) which is disposed downstream of a suction fan unit (12) with at least one housing (13), at least one inlet opening (24) and at least one outlet opening (28), a chopping device (5) as well as at least one spreader device (6) for accepting and discharging a flow of material (34) passing through the chopping device (5), wherein the at least one inlet opening (24) of the suction fan unit (12) faces the cleaning device (4) and the at least one outlet opening (28) of the suction fan unit (12) is positioned below the chopping device (5), so that a flow of air and material (17) taken in through the at least one inlet opening (24) by the suction fan unit (12) is transferred onto the spreader device (6) in a lower region of the spreader device (6), wherein the spreader device (6) discharges the flow of material (34) passing through the chopping device (5) in an upper region and discharges the flow of air and material (17) in the lower region, **characterized in that** at least one rotor (21) is rotatably disposed about a horizontal axis (15) in the at least one housing (13), and **in that** the at least one housing (13) has two mirror image, tapered housing sections (14) which are disposed coaxially with respect to the horizontal axis (15).

2. The combine harvester (1) according to claim 1, **characterized in that** the at least one inlet opening (24) is configured as an opening in at least one of the housing sections (14) which is disposed coaxially with respect to the horizontal axis (15) and the at least one outlet opening (28) is configured as an opening which extends perpendicularly to a guiding segment (16) which bridges a region between the suction fan unit (12) and the spreader device (6).

3. The combine harvester (1) according to claim 1 or claim 2, **characterized in that** the at least one inlet opening (24) is respectively delimited by a guide section (25) which extends in sections of the circumferential direction of the horizontal axis (15) and which tapers in the axial direction, wherein the guide section (25) is interrupted in sections of its side facing the cleaning device (4).

4. The combine harvester (1) according to one of claims 1 to 3, **characterized in that** in the region of the inlet opening (24), cutting elements are disposed on a shaft (20) which rotates about the horizontal axis (15).

5. The combine harvester (1) according to one of claims 1 to 4, **characterized in that** the suction fan unit (12) can be transposed by means of a lever assembly out of its operating position, in which the transfer of the flow of air and material (17) provided by the suction fan unit (12) to the spreader device (6) occurs, into a transport position in which the suction fan unit (12) is located in a position in the interior of the machine housing (7) below the separating device (3).

6. The combine harvester (1) according to one of claims 2 to 5, **characterized in that** the at least one outlet opening (28) of the suction fan unit (12) is formed on at least one channel segment (22) which is contiguous with the guiding segment (16).

7. The combine harvester (1) according to one of claims 1 to 6, **characterized in that** the suction fan unit (12) takes in air substantially through an intake region located in front of the cleaning device (4), wherein at least one air guide element (31, 32) is disposed in the intake region.

8. The combine harvester (1) according to one of claims 1 to 7, **characterized in that** the threshing device (2), the separating device (3), the cleaning device (4), the suction fan unit (12), the chopping device (5) are surrounded by a machine housing (7), wherein shuttering elements are provided at least in the region of the threshing device (2) and the separating device (3) which serve to deflect the flow of air in the interior of the machine housing (7) taken in by the suction fan unit (12).

9. The combine harvester (1) according to one of claims 1 to 8, **characterized in that** a ventilated drop step is formed between a returns pan (9) disposed below the separating device (3) and a grain pan (8) disposed below the threshing device (2).

10. The combine harvester (1) according to one of claims 1 to 9, **characterized in that** at least one sensor element (23) configured as a loss sensor is disposed in the region of the at least one outlet opening (28) of the suction fan unit (12).

11. The combine harvester (1) according to one of claims 1 to 10, **characterized in that** at least one sensor element (23) configured as a radar sensor is disposed in the region of the at least one outlet opening (28) of the suction fan unit (12).

12. The combine harvester (1) according to one of claims 1 to 11, **characterized in that** at least one sensor element (23) configured as a deflector plate with a weighing cell is disposed in the region of the at least one outlet opening (28) of the suction fan unit (12).

13. The combine harvester (1) according to one of claims 1 to 12, **characterized in that** the suction fan unit (12) is configured for the separation of chaff taken in with the flow of air and for transfer onto a transport vehicle.

## Revendications

1. Moissonneuse-batteuse automotrice (1) incluant un dispositif de battage (1), un dispositif séparateur (3), un dispositif de nettoyage (4) en aval duquel est disposé un agencement de ventilateur d'aspiration (12) avec au moins un carter (13), au moins une ouverture d'entrée (24) et au moins une ouverture de sortie (28), incluant un dispositif de hachage (5) ainsi qu'au moins un dispositif d'épandage (6) pour recevoir et évacuer un flux de produit (34) traversant le dispositif de hachage (5), la au moins une ouverture d'entrée (24) de l'agencement de ventilateur d'aspiration (12) étant tournée vers le dispositif de nettoyage (4) et la au moins une ouverture de sortie (28) de l'agencement de ventilateur d'aspiration (12) étant positionnée sous le dispositif de hachage (5), de sorte qu'un transfert au dispositif d'épandage (6) d'un courant d'air et de produit (17) aspiré par l'agencement de ventilateur d'aspiration (12) par l'intermédiaire de la au moins une ouverture d'entrée (24) s'effectue dans une zone inférieure du dispositif d'épandage (6), le dispositif d'épandage (6) évacuant, dans une zone supérieure, le flux de produit (34) traversant le dispositif de hachage (5) et, dans la zone inférieure, le courant d'air et de produit (17), **caractérisée en ce que**, dans au moins un carter (13), au moins un élément éparpilleur (21) est monté en rotation autour d'un axe horizontal (15), et **en ce que** le au moins un carter (13) comporte deux portions de carter coniques (14) disposées selon une symétrie en miroir, lesquelles sont disposées coaxialement à l'axe horizontal (15).

2. Moissonneuse-batteuse (1) selon la revendication 1, **caractérisée en ce que** la au moins une ouverture d'entrée (24) est conformée en une ouverture disposée coaxialement à l'axe horizontal (15) dans au moins une des portions de carter (14), et la au moins une ouverture de sortie (28) est conformée en une ouverture s'étendant perpendiculairement à un segment de guidage (16) pontant une zone entre l'agencement de ventilateur d'aspiration (12) et le dispositif d'épandage (6).

3. Moissonneuse-batteuse (1) selon la revendication 1 ou 2, **caractérisée en ce que** la au moins une ouverture d'entrée (24) est limitée par respectivement une portion directrice (25) s'étendant par portions dans la direction circonférentielle de l'axe horizontal (15), se rétrécissant dans la direction axiale, la portion directrice (25) étant interrompue par portions sur son côté tourné vers le dispositif de nettoyage (4).

4. Moissonneuse-batteuse (1) selon une des revendications 1 à 3, **caractérisée en ce que** dans la zone de l'ouverture d'entrée (24) sont disposés des éléments de coupe sur un arbre (20) tournant autour de l'axe horizontal (15).

5. Moissonneuse-batteuse (1) selon une des revendications 1 à 4, **caractérisée en ce que** l'agencement de ventilateur d'aspiration (12) est transférable, au moyen d'un agencement de levage, de sa position de fonctionnement, dans laquelle s'effectue la transmission au dispositif d'épandage (6) du courant d'air et de produit (17) fourni par l'agencement de ventilateur d'aspiration (12), vers une position de transport dans laquelle l'agencement de ventilateur d'aspiration (12) se trouve dans une position à l'intérieur du carter de machine (7) au-dessous du dispositif de séparation (3).

6. Moissonneuse-batteuse (1) selon une des revendications 2 à 5, **caractérisée en ce que** la au moins une ouverture de sortie (28) de l'agencement de ventilateur d'aspiration (12) est ménagée sur au moins un segment de canal (22) auquel se raccorde le segment de guidage (16).

7. Moissonneuse-batteuse (1) selon une des revendications 1 à 6, **caractérisée en ce que** l'agencement de ventilateur d'aspiration (12) aspire de l'air sensiblement par l'intermédiaire d'une zone d'aspiration se trouvant devant le dispositif de nettoyage (4), dans la zone d'aspiration étant disposé au moins un élément de conduite d'air (31, 32).

8. Moissonneuse-batteuse (1) selon une des revendications 1 à 7, **caractérisée en ce que** le dispositif de battage (2), le dispositif séparateur (3), le dispositif de nettoyage (4), l'agencement de ventilateur d'aspiration (12), le dispositif de hachage (5) sont entourés par un carter de machine (7), au moins dans la zone du dispositif de battage (2) et du dispositif séparateur (3) étant disposés des éléments de fermeture qui servent à dévier à l'intérieur du carter de machine (7) le courant d'air aspiré par l'agencement de ventilateur d'aspiration (12).

9. Moissonneuse-batteuse (1) selon une des revendications 1 à 8, **caractérisée en ce qu'**une cascade ventilée est ménagée entre une table de retour (9) disposée au-dessous du dispositif séparateur (3) et une table de préparation (8) disposée au-dessous du dispositif de battage (2).

10. Moissonneuse-batteuse (1) selon une des revendications 1 à 9, **caractérisée en ce que** dans la zone de la au moins une ouverture de sortie (28) de l'agencement de ventilateur d'aspiration (12) est disposé au moins un élément de capteur (23) conformé en capteur de pertes.

11. Moissonneuse-batteuse (1) selon une des revendications 1 à 10, **caractérisée en ce que** dans la zone de la au moins une ouverture de sortie (28) de l'agencement de ventilateur d'aspiration (12) est disposé au moins un élément de capteur (23) conformé en capteur radar.

12. Moissonneuse-batteuse (1) selon une des revendications 1 à 11, **caractérisée en ce que** dans la zone de la au moins une ouverture de sortie (12) de l'agencement de ventilateur d'aspiration (12) est disposé au moins un élément de capteur (23) conformé en plaque déflectrice avec cellule de pesée.

13. Moissonneuse-batteuse (1) selon une des revendications 1 à 12, **caractérisée en ce que** l'agencement de ventilateur d'aspiration (12) est agencé pour séparer de la balle aspirée avec le courant d'air et pour la transférer sur un véhicule de transport.
